# FASCICULE DE BREVET EUROPEEN

(11) **EP 2 176 311 B1**
(45) Date de publication et mention de la délivrance du brevet: **22.06.2011**
(21) Numéro de dépôt: 08827384.2
(22) Date de dépôt: 31.07.2008
(51) Int. Cl.: C08G 18/08, C08G 18/12, C08G 18/30, C08K 5/32, C08L 75/04, C08L 67/00, C08L 69/00, C08L 63/02, C08L 67/04, B29B 9/12, B29C 43/00, B29C 45/00, B29C 47/00, B29C 35/02

(54) **MATIÈRE THERMOPLASTIQUE POSTRÉTICULABLE APRÈS TRANSFORMATION ET ARTICLES MOULÉS STABLES À TRÈS HAUTE TEMPÉRATURE OBTENUS APRÈS TRANSFORMATION**
NACH EINER TRANSFORMATION VERNETZBARES THERMOPLASTISCHES MATERIAL SOWIE DURCH DIE TRANSFORMATION GEWONNENE UND GEGEN SEHR HOHE TEMPERATUREN STABILE GEFORMTE ARTIKEL
THERMOPLASTIC MATERIAL POST-CROSSLINKABLE AFTER TRANSFORMATION AND MOULDED ARTICLES STABLE AT A VERY HIGH TEMPERATURE AND OBTAINED AFTER TRANSFORMATION

(30) Priorité: 07.08.2007 FR 0756972
(43) Date de publication de la demande: 21.04.2010
(73) Titulaire: Setup Performance, 38290 Frontonas (FR)
(72) Inventeur: SAUTEL, Henri, F-69003 Lyon (FR); TIREL, Yvon, F-38090 Roche (FR); GIMENEZ, Jérôme, F-69100 Villeurbanne (FR); LAGNEAUX, Didier, F-38460 Chozeau (FR)
(74) Mandataire: Denjean, Eric
(86) Numéro de dépôt international: PCT/FR2008/051449
(87) Numéro de publication internationale: WO 2009/022076

(56) Documents cités:
- WO-A-98/33837
- WO-A-03/035711
- WO-A-2006/134138
- FR-A- 2 885 729
- US-A- 4 261 946
- DATABASE WPI Week 198241 Thomson Scientific, London, GB; AN 1982-86769E XP002479625 & JP 57 143317 A (NIPPON POLYURETHANE KOGYO KK) 4 septembre 1982 (1982-09-04)

## Description

L'invention a pour objet une nouvelle matière thermoplastique post réticulable après transformation, c'est-à-dire une matière thermoplastique pour laquelle la majeure partie du processus de réticulation a lieu après la transformation, par contact entre l'article moulé et l'humidité de l'air.

Il s'ensuit que l'invention concerne également les articles moulés et notamment des granulés obtenus immédiatement après transformation de même que des articles moulés réticulés obtenus après transformation et réticulation au contact de l'humidité.

L'invention se rapporte enfin au procédé de fabrication de la nouvelle matière thermoplastique, de même qu'à celui des granulés et articles moulés.

Le document JP57143317 décrit un procédé de modification de polyuréthane thermoplastique pour en améliorer la stabilité thermique consistant à ajouter au polyuréthane, un polyisocyanate préalablement fabriqué. Le polyisocyanate représente entre 3 et 30% en poids du mélange TPU/polyisocyanate.

Le document EP 1 531 173 décrit un composite associant un polymère thermoplastique sur une couche de polyuréthane obtenue par réaction entre un prépolymère présentant des fonctions isocyanate avec des composés susceptibles de réagir avec les fonctions isocyanate dudit prépolymère.

Le document FR-A-2 885 729 décrit l'utilisation de polyuréthane thermoplastique pour la fabrication de câbles de manutention, c'est-à-dire de câbles d'alimentation électrique et/ou de transmission de signal. Il y est rappelé que le polyuréthane est résistant à l'abrasion et offre d'excellentes propriétés mécaniques tant du point de vue résistance à l'abrasion que flexibilité. Il est également mentionné que l'inconvénient majeur du polyuréthane est de fluer à chaud à partir d'une certaine température, de l'ordre de 100°C. Pour résoudre ce problème, ce document propose d'utiliser comme agent de réticulation, un agent doté d'au moins deux fonctions isocyanate, le processus de réticulation se faisant par auto réticulation pendant la transformation et éventuellement ultérieurement. L'agent de réticulation illustré est le diisocyanate de diphénylméthane (MDI) pour lequel il est démontré que plus sa concentration est élevée et plus la quantité de matrice polymère participant au réseau réticulé est importante. Il est à noter que la fonctionnalité du MDI n'est pas mentionnée. S'agissant des propriétés thermomécaniques, il est indiqué que l'on observe une augmentation significative de ces propriétés lorsque la concentration en MDI augmente, étant rappelé que la concentration maximale en MDI dans le mélange tel qu'illustré est de 8% par rapport au TPU.

A la lecture de ce document, il apparaît donc que pour améliorer davantage encore les propriétés thermomécaniques des polyuréthanes thermoplastiques, on pourrait envisager d'augmenter la quantité de MDI.

Pourtant, d'après les documents WO 2006/134138 et WO 2005/054322, l'addition d'une forte quantité de diisocyanate à un TPU thermoplastique ne peut pas être envisagée favorablement eu égard à la différence de viscosité entre les deux matériaux, les diisocyanates étant trop fluides et conduisant à un mélange insatisfaisant. Par ailleurs, l'incorporation d'une forte quantité de diisocyanate conduirait à dégrader le poids moléculaire du TPU. Pour résoudre ce problème, les documents précités proposent
- soit d'incorporer le MDI en présence d'un prépolymère de MDI, d'un carbodiimide modifié MDI et d'un biuret ou d'un isocyanurate contenant des fonctions isocyanates,
- soit d'incorporer un carbodiimide modifié MDI, un prépolymère de MDI et/ou un isocyanurate d'hexaméthylène diisocyanate.

Dans le cadre de ses travaux sur les TPU, le Demandeur a constaté que de manière tout à fait surprenante, il était possible d'augmenter la concentration de MDI sans dégradation des poids moléculaires, lorsqu'on mettait en oeuvre des MDI de fonctionnalité supérieure ou égale à 2 utilisés sous forme de monomère et non de prépolymère ou de trimère et que dans de telles conditions, on obtenait des produits moulés présentant des propriétés mécaniques stables à des températures de l'ordre de 300°C après post réticulation.

Dans une forme de réalisation particulière, le MDI utilisé peut être un MDI non purifié de fonctionnalité comprise entre 2 et 3, c'est-à-dire un MDI se présentant sous la forme d'un mélange constitué de MDI monomère de fonctionnalité égale à 2 et d'oligomères de MDI (PDMI) de fonctionnalité comprise entre 3 et 7 principalement. A titre d'exemple, on peut citer le MDI de fonctionnalité 2,7 commercialisé par la société Hunstman sous la référence Suprasec 5025 constitué de 50% de monomère MDI di fonctionnel et 50% d'oligomère PDMI.

Dans la suite de la description, le terme fonctionnalité lorsqu'il se rapporte à l'agent réticulant, en pratique le diisocyanate, désigne le rapport entre le nombre de moles de NCO et le nombre de moles de diisocyanate.

Le Demandeur a ainsi observé que la mise en oeuvre d'une forte teneur de diisocyanate de fonctionnalité supérieure ou égale à 2 modifiait la cinétique de réticulation. En effet, le polymère thermoplastique se trouve dans ces conditions muni d'un nombre élevé de fonctions isocyanate, disponibles après transformation, assurant la post réticulation au contact de l'humidité. Autrement dit, il se constitue un réseau semi-interpénétré polymère thermoplastique polyurée réticulé obtenue par croissance du réseau polyurée dans la matrice polymère après la mise en forme.

Pour limiter la dégradation du poids moléculaire du TPU due à la forte teneur en diisocyanate, le Demandeur a eu l'idée, plutôt que de mettre en oeuvre un diisocyanate en présence d'un prépolymère ou d'un diisocyanate modifié de fonctionnalité élevée, tel que par exemple un carbodiimide modifié MDI, de former *in situ*, pendant l'extrusion réactive, un polyisocyanate de fonctionnalité élevée, en pratique supérieure à 2, à partir d'un monomère diisocyanate de fonctionnalité supérieure ou égale 2, en présence d'un polyol de fonctionnalité supérieure ou égale à 3.

Plus généralement, le Demandeur a constaté qu'il était possible d'incorporer une forte teneur de monomère diisocyanate de fonctionnalité supérieure ou égale à 2 dans un polymère thermoplastique polaire, sans diminution importante de viscosité.

L'invention a donc pour objet une matière thermoplastique présentant des groupements réactifs vis-à-vis des fonctions isocyanates et/ou des fonctions alcools, post réticulable après transformation, obtenue par réaction entre un polymère thermoplastique polaire et au moins un monomère diisocyanate purifié de fonctionnalité égale à 2 ou non purifié de fonctionnalité comprise entre 2 et 3 et représentant entre 4 et 60%, avantageusement entre 20 et 60% en poids du polymère thermoplastique polaire, en présence d'un polyol de fonctionnalité supérieure ou égale à 3.

Selon l'invention, le mélange contient au moins un monomère diisocyanate purifié de fonctionnalité égale à 2 ou non purifié de fonctionnalité comprise entre 2 et 3. Le monomère diisocyanate purifié correspond à un monomère présentant 2 fonctions isocyanate. Un monomère diisocyanate non purifié correspond à un mélange contenant nécessairement un monomère présentant 2 fonctions isocyanate et des oligomères de MDI (PDMI) de fonctionnalité supérieure, comprise entre 3 et 7 principalement. La fonctionnalité finale (rapport entre le nombre de moles de NCO et le nombre de moles de diisocyanate ) du mélange est inférieure ou égale à 3.

Dans la suite de la description, le terme fonctionnalité lorsqu'il se rapporte au polyol désigne le rapport entre le nombre de moles de OH portés par le polyol et le nombre de moles de polyol.

De même, par l'expression « polymère thermoplastique polaire », on désigne un polymère présentant des groupements réactifs vis-à-vis des fonctions isocyanates et/ou des fonctions alcools du polyol.

Ces groupements peuvent être notamment mais de façon non limitative des groupements hydroxyle, acide carboxylique, amine, amide, énamine, oxalolidine, époxyde, uréthane, thioisocyanate, isocyanate, imine, thiol, acrylique, anhydride maléique, imide et ester.

Parmi les « polymère thermoplastique polaire », on désigne notamment mais de façon non limitative, les polyuréthanes de type polyester, polyéther, polycarbonate, les polyesters comme par exemple le PET, le PBT, le PTT, le PETG, la PCL, le PLA, les copolymères à base de polyester tels que les HYTREL® et les ARMITREL®, les polyamides comme par exemple le PA6, le PA 6.6, le PA 11 et le PA12, les copolymères à base de polyamide comme tels que les PEBAX® et les VESTAMIDE ®, les POM homo ou copolymère, les polycarbonates, les alliages contenant au moins un des polymères thermoplastiques pré cités.

En pratique et sans que ce soit limitatif, le polyol est choisi dans le groupe comprenant les monomères ou les polymères triol, les monomères ou les polymères tétrol, les polymères de la famille des Diglycidyl éther de Bisphénol, les polyphénoxy copolymères du bisphénol A et de l'épichlorohydrine, les polyglycérol hyper branchés.

Selon une autre caractéristique, le monomère diisocyanate a une faible masse moléculaire en pratique inférieure à 1000 g/mol.

Comme déjà dit, la présence de polyol de fonctionnalité supérieure ou égale à 3 permet d'incorporer des fortes teneurs de monomère diisocyanate purifié ou non, comprises entre 4 et 60%, en pratique comprises entre 20 et 60%, avantageusement entre 10 et 50%, voire entre 30 et 60%, de préférence entre 40 et 60%.

La concentration de polyol est, quant à elle, ajustée en fonction de la quantité initiale de diisocyanate initial et de la nature dudit polyol en fonction des critères suivants :
- excès systématique de fonction isocyanate,
- contrôle de la viscosité du mélange et de la fonctionnalité finale de l'isocyanate incorporé,
- contrôle des propriétés thermomécaniques du matériau après post-réticulation.

En pratique, le polyol représente entre 0,05 et 20% en poids du polymère thermoplastique.

Par ailleurs et sans que ce soit limitatif, le monomère diisocyanate est choisi dans le groupe comprenant le tri-, tétra-, penta-, hexa-, hepta et/ou octaméthylène diisocyanate, 2-méthyl-pentaméthylène diisocyanate-1,5, 2-éthylbutylène diisocyanate-1,4, pentaméthylène diisocyanate-1,5, le butylène diisocyanate-1,4, 1-isocyanato-3,3,5-triméthyl-5-isocyanatométhylcyclohexane (IPDI isophorone diisocyanate), 1,4 - et/ou 1,3-bis (isocyanatométhyl)cyclohexane (HXDI), 1, 4-cyclohexane diisocyanate, 1-méthyl-2,4 et/ou -2,6-cyclohexane diisocyanate et/ou 4,4 '-, 2.4 ' - et 2.2 ' - dicyclohéxylméthane diisocyanate, 2.2' -, 2.4'- et/ou 4.4'- diphénylméthane diisocyanate (MDI), 1, 5-naphthylène diisocyanate (NDI), 2.4 - et/ou 2.6 - toluylène diisocyanate (TDI), 3.3'-diméthyldiphényl diisocyanate, 1,2-diphényléthane diisocyanate et/ou phénylène diisocyanate.

Comme déjà dit, la nouvelle matière plastique à base de monomère de diisocyanate et de polyol permet d'assurer la réticulation du polymère thermoplastique non pas pendant le procédé d'extrusion réactive ni pendant la transformation du polymère thermoplastique mais postérieurement à la transformation au contact de l'humidité. C'est la raison pour laquelle on parle de post-réticulation.

Il s'ensuit que la matière thermoplastique de l'invention peut être utilisée de deux manières distinctes.

Dans un premier cas de figure, on extrude et on transforme le polymère thermoplastique polaire pour obtenir des granulés, lesquels sont stockés à l'abri de l'humidité dans des sacs étanches, de manière à pouvoir être retransformés pour la réalisation du produit fini.

Dans un second cas de figure, l'article moulé est transformé en ligne à l'issue du procédé d'extrusion réactive ou à partir des granulés non réticulés.

L'invention a également pour objet un procédé pour la fabrication de la matière plastique précédemment décrite selon lequel, à chaud, on injecte ou on extrude ou on compresse un mélange contenant le polymère thermoplastique polaire, le monomère diisocyanate et le polyol.

En pratique, les constituants du mélange sont introduits en un seul point ou en des points distincts de l'outillage.

Lorsque l'on souhaite fabriquer des granulés, on extrude, on injecte ou on compresse à chaud le mélange contenant le polymère thermoplastique polaire, le monomère diisocyanate et le polyol, les granulés étant ensuite refroidis et stockés à l'abri de l'humidité, permettant ainsi de ne pas initier la post réticulation.

Lorsqu'il s'agit de fabriquer l'article moulé final :
- on extrude, on injecte ou on compresse à chaud un mélange contenant le polymère thermoplastique polaire, le monomère diisocyanate et le polyol,
- on transforme le mélange obtenu à la forme souhaitée de l'article,
- on refroidit l'article moulé, la post réticulation s'effectuant ultérieurement au contact de l'humidité dans un délai de 8 jours à 3 semaines.

Dans une autre forme de réalisation, l'article moulé peut être également fabriqué après transformation des granulés précédemment décrits. Dans ce cas, la post réticulation s'effectue ultérieurement, au contact de l'humidité de l'air dans un délai de 8 jours à 3 semaines.

L'invention et les avantages qui en découlent ressortiront bien des exemples de réalisation qui suivent à l'appui des figures annexées.
Les figures 1 et 2 correspondent aux spectres des produits MPR1, MPR2, MPR3 obtenus par analyse mécanique dynamique (DMA) réalisée à 1 Hz et 5°C/min.
La figure 3 correspond aux spectres des produits MPR4, MPR5 obtenus par DMA réalisée à 1 Hz et 5°C/min.
La figure 4 correspond aux spectres du produit MPR6 obtenu par DMA réalisée à 1 Hz et 5°C/min.
La figure 5 correspond aux spectres du produit MPR7 obtenu par DMA réalisée à 1 Hz et 5°C/min.
La figure 6 correspond aux spectres du produit MPR8 obtenu par DMA réalisée à 1 Hz et 5°C/min.

### EXEMPLES

### Présentation des exemples

L'ensemble des matériaux post réticulables (ci après désignés par le terme MPR) présentés ici pour illustrer l'invention, ont été préparés en extrudeuse bi vis (Diamètre 26 / 50D). La régulation en température de l'extrudeuse est assurée par 10 éléments de chauffe distincts (10 zones de chauffe notées Z1 à Z10). Le profil des températures utilisé pour chaque exemple est donné dans le tableau 1 (Températures exprimées en °C).

**Tableau 1**

| Matière | Z1 | Z2 | Z3 | Z4 | Z5 | Z6 | Z7 | Z8 | Z9 | Z10 |
|---|---|---|---|---|---|---|---|---|---|---|
| MPR1 | 180 | 180 | 180 | 180 | 180 | 190 | 170 | 160 | 150 | 190 |
| MPR2 | 180 | 180 | 180 | 180 | 180 | 140 | 140 | 140 | 140 | 140 |
| MPR3 | 190 | 200 | 200 | 200 | 200 | 200 | 200 | 200 | 200 | 200 |
| MPR4 | 180 | 200 | 200 | 200 | 200 | 200 | 200 | 200 | 200 | 200 |
| MPR5 | 180 | 200 | 200 | 200 | 200 | 200 | 200 | 200 | 200 | 200 |
| MPR6 | 260 | 260 | 260 | 260 | 260 | 260 | 260 | 260 | 260 | 260 |
| MPR7 | 230 | 230 | 230 | 230 | 230 | 230 | 230 | 230 | 230 | 230 |
| MPR8 | 210 | 210 | 210 | 210 | 210 | 210 | 210 | 210 | 210 | 210 |

### Exemples 1, 2 et 3 (MPR1, MPR2, MPR3)

Ces trois premiers exemples correspondent à des MPR à base du polyuréthane thermoplastique polyester .

Le premier (MPR1) est constitué de 72% de TPU Estane® 58447 nat 021, 8% de CAPA® 3091 et de 20% de SUPRASEC® 1400. La CAPA® 3091 est un triol polyester terminé par des OH primaires de masse molaire 900 g/mol. Le SUPRASEC® 1400 est un MDI 4,4' de fonctionnalité 2.

Le deuxième (MPR2) est constitué de 39% de TPU Estane® 58447 nat 021, 60% de SUPRASEC® 5025 et 1 % de PKHH®. Le PKHH® est un polyphénoxy copolymère de bisphenol A et d'épichlorohydrine de masse molaire en nombre égale à 13000 g/mol. Sa fonctionnalité est d'environ 50. Les fonctions hydroxyles sont des OH secondaires. Le SUPRASEC® 5025 est un MDI 4,4' de fonctionnalité 2.7.

Le troisième matériau post réticulable (MPR3) choisi pour illustrer l'invention est constituée de 72% d'un TPU polyester Desmopan® 487, 8% de CAPA® 3091 et 20% de SUPRASEC® 1400 .

Pour ces trois exemples, le polyuréthane et le polyol sont introduits dans l'extrudeuse ensemble en tête d'extrudeuse (alimentation principale). Le MDI est incorporé en deuxième entrée (située à environ 25D).

### Exemples 4 et 5 (MPR4, MPR5)

Les exemples 4 et 5 correspondent à deux MPR à base de PETG, un polyester thermoplastique.

Le premier (MPR4) est constitué de 78% d'Eastar® 6763, 20% de SUPRASEC® 1400 et 2% de PKHH®.

Le deuxième (MPR5) est constitué de 48% d'Eastar® 6763, 50% de SUPRASEC® 1400 et 2% de PKHH®.

Pour ces deux exemples, le polyester, le polyol et le MDI sont introduits dans l'extrudeuse ensemble en tête d'extrudeuse (alimentation principale).

### Exemple 6 (MPR6)

L'exemple 6 correspond à un MPR à base de PET, un polyester thermoplastique.

Ce MPR6 est constitué de 78% d' Eastar® 9921W, 20% de SUPRASEC® 1400 et 2% de PKHH®.

### Exemple 7 (MPR7)

L'exemple 7 correspond à un MPR à base d'HYTREL®, un élastomère polyester

Ce MPR7 est constitué de 78% d'HYTREL®5526, 20% de SUPRASEC® 1400 et 2% de PKHH®.

### Exemple 8 (MPR8)

L'exemple 8 correspond à un MPR à base de polycarbonate.

Ce MPR8 est constitué de 78% de MAKROLON® 2205 FBL , 20% de SUPRASEC® 1400 et 2% de PKHH®.

Pour ces trois exemples, le thermoplastique, le polyol et le MDI sont introduits dans l'extrudeuse ensemble en tête d'extrudeuse (alimentation principale).

### Thermoplasticités des matières post réticulables

Après fabrication, les granulés sont séchés et emballés sous vide. Ces granulés sont toujours thermoplastiques comme l'indiquent les valeurs de MFI (Melt Flow Index) données dans le tableau 2, mesurées à partir des granulés de thermoplastiques modifiés testés un mois après production et emballage sous vide.

**Tableau 2**

| Matière | Température (°C) | Charge (kg) | MFI (g/10min) |
|---|---|---|---|
| MPR1 | 190 | 2.16 | 18.1 |
| MPR2 | 190 | 2.16 | 63 |
| MPR3 | 190 | 2.16 | 6.3 |
| MPR4 | 190 | 2.16 | 3.0 |
| MPR5 | 190 | 2.16 | 3.3 |
| MPR6 | 230 | 2.16 | 30 |
| MPR7 | 260 | 2.16 | 9.4 |
| MPR8 | 190 | 2.16 | 11.4 |

Afin d'évaluer les performances des matériaux post réticulés, les granulés ont été mis en forme avant la post réticulation par moulage par compression ou par moulage par injection. Les conditions de mise en oeuvre sont indiquées dans le tableau 3 ci-dessous.

**Tableau 3**

| Matière | Moulage par compression | | Moulage par injection | |
|---|---|---|---|---|
| | Température (°C) | Pression (Bar) | Température matière (°C) | Température moule (°C) |
| MPR1/MPR2 et MPR3 | 190 | 20 | 190 | 70 |
| MPR4 et MPR5 | 200 | 20 | 200 | 40 |
| MPR6 | 230 | 20 | 230 | 70 |
| MPR7 | 260 | 20 | 260 | 140 |
| MPR8 | 220 | 20 | 220 | 80 |

### Performances des matériaux post réticulés

### Exemples 1, 2 et 3

Ces trois exemples montrent que la post réticulation des TPU permet d'obtenir une nouvelle gamme de matériaux à haute tenue thermique allant de l'élastomère au matériau rigide. La rigidité du matériau post réticulé dépend de la quantité de diisocyanate incorporé au polyuréthane.

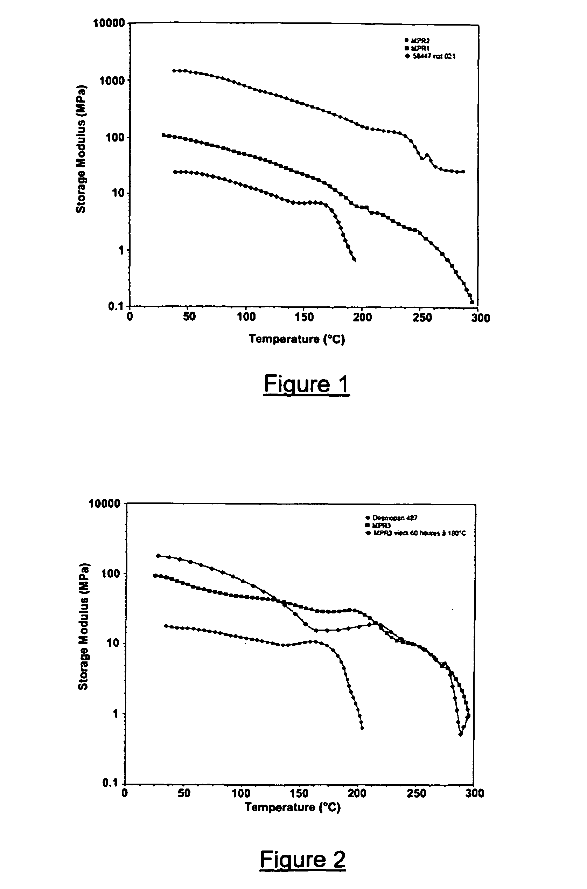

Les matériaux MPR1 et MPR3 contenant 20% de MDI donnent des élastomères tenant thermiquement jusqu'à 250°C sans effondrement des propriétés thermomécaniques (cf. spectres présentés figures 1 et 2 obtenus par analyse mécanique dynamique (DMA) réalisée à 1 Hz et 5°C/min ).

La post réticulation entraîne une diminution importante de l'allongement à la rupture comme l'indiquent les valeurs données dans le tableau 4 (valeurs mesurées à 300 mm/min). Ces valeurs de déformation demeurent cependant acceptables pour un élastomère. D'autre part, les valeurs de déformation rémanente après compression (DRC), également indiquées dans le tableau 4, mesurées pour une déformation en compression de 25%, diminuent. Les élastomères obtenus par post réticulation présentent ainsi une meilleure résistance mécanique sous contrainte appliquée en continue.

**Tableau 4**

| Matière | Estane® 58447 nat 021 | MPR1 | Desmopan® 487 | MPR3 |
|---|---|---|---|---|
| Allongement à la rupure (%) | 636 | 213 | 673 | 176 |
| Contrainte à la rupture (MPa) | 34 | 25 | 28 | 27 |
| DRC 22 heures à 70°C (%) | 29 | 19 | 30 | 18 |
| DRC 22 heures à 100°C (%) | 52 | 37 | 55 | 36 |
| DRC 70 heures à 100°C (%) | 61 | 58 | 60 | 46 |
| DRC 22 heures à 120°C (%) | 65 | 62 | 67 | 60 |

Enfin, hors contrainte mécanique, les élastomères post réticulés supportent des vieillissements longs à température élevée sans altération de leur comportement thermomécanique. La figure 2 qui représente les spectres DMA obtenus pour le MR3 et le MPR3 vieilli 60 heures à 180°C, illustre bien cette caractéristique.

Le matériau MPR2 contenant 60% de MDI est par contre rigide et tient en température jusqu'à 300°C (cf. spectre DMA réalisé à 1 Hz et 5°C/min présenté figure 1).

### Exemples 4 et 5

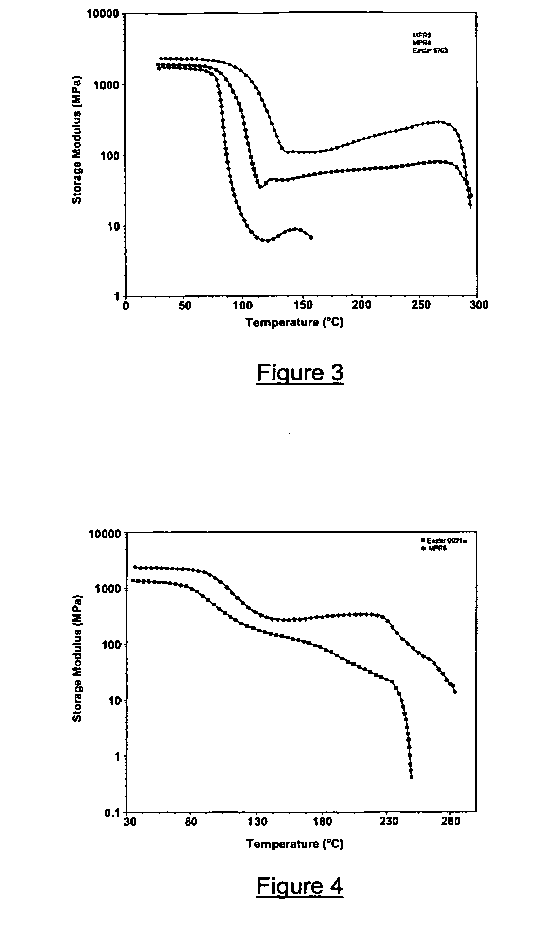

La post réticulation du PETG permet d'augmenter la température de transition vitreuse (cf. spectres DMA réalisés à 1 Hz et 5°C/min présentés figure 3). Cette augmentation est d'autant plus grande que la quantité d'isocyanate incorporée au polymère est importante (augmentation de 25°C et 43°C pour respectivement 20% et 50% de MDI). Les matériaux post réticulés ne s'effondrent plus après la transition vitreuse est présentent un plateau caoutchoutique stable jusqu'à 280°C. La valeur du module au plateau caoutchoutique croît également avec la teneur de MDI incorporée au PETG.

### Exemple 6:

La post réticulation du PET permet d'augmenter la température de transition vitreuse de 20°C, de stabiliser le module au plateau caoutchoutique jusqu'à 250°C et d'empêcher l'effondrement du matériau jusqu'à 280°C (cf. spectre DMA réalisé à 1 Hz et 5°C/min figure 4).

### Exemple 7:

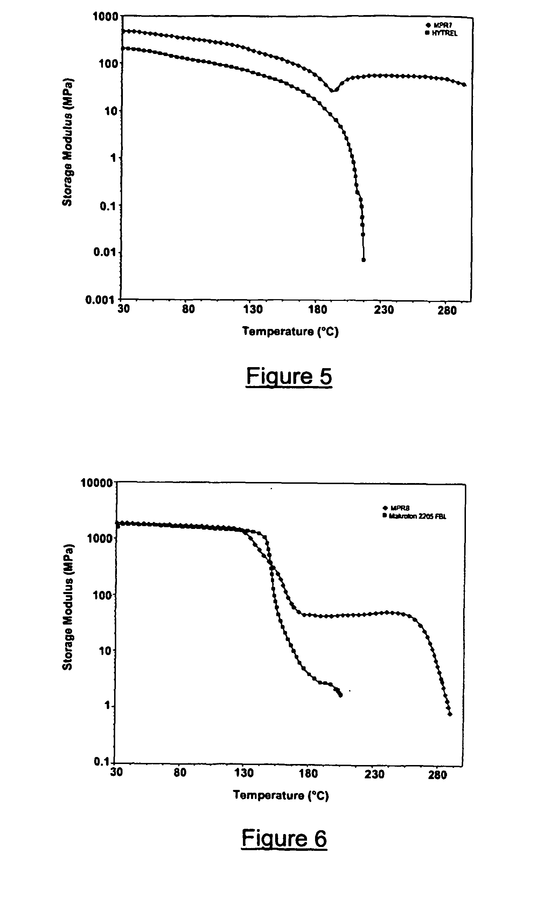

La post réticulation de l'HYTREL® conduit à un matériau élastomère stable jusqu'à 300°C (cf. spectre DMA réalisé à 1 Hz et 5°C/min présenté figure 5) qui conserve de bonnes propriétés mécaniques en terme d'allongement et de contrainte à la rupture (cf. tableau 5, valeurs mesurées à 50mm/min).

L'allongement à la rupture diminue d'environ 18%, par contre la contrainte à la rupture augmente d'environ 86%.

**Tableau 5**

| Matière | Allongement à la rupure (%) | Contrainte à la rupture (MPa) |
|---|---|---|
| HYTREL | 690 | 21 |
| MPR7 | 567 | 39 |

### Exemple 8

La post réticulation du polycarbonate permet d'obtenir un matériau qui ne s'écroule plus après la transition vitreuse et qui présente un module au plateau caoutchoutique stable jusqu'à 280°C (cf. spectre DMA réalisé à 1 Hz et 5°C/min figure 6).

## Revendications

1. Matière thermoplastique post réticulable après transformation, obtenue par réaction entre un polymère thermoplastique polaire et au moins un monomère diisocyanate purifié de fonctionnalité égale à 2 ou non purifié de fonctionnalité comprise entre 2 et 3, et représentant entre 4 et 60% en poids du polymère thermoplastique polaire, en présence d'un polyol de fonctionnalité supérieure ou égale à 3, ledit polymère thermoplastique polaire présentant des groupements réactifs vis-à-vis des fonctions isocyanates et/ou des fonctions alcools du polyol.

2. Matière thermoplastique selon la revendication 1, **caractérisée en ce que** le monomère diisocyanate représente entre 20 et 60% en poids du polymère thermoplastique polaire.

3. Matière thermoplastique selon la revendication 1, **caractérisée en ce que** le monomère diisocyanate possède une masse inférieure à 1000 g/mol

4. Matière thermoplastique selon la revendication 1, **caractérisée en ce que** le polyol représente entre 0.05 et 20% de la masse du thermoplastique polaire.

5. Matière thermoplastique selon la revendication 1, **caractérisée en ce que** le monomère diisocyanate est choisi dans le groupe comprenant le tri-, tétra-, penta-, hexa-, hepta et/ou octaméthylène diisocyanate, 2-méthyl-pentaméthylène diisocyanate-1,5, 2-éthylbutylène diisocyanate-1,4, pentaméthylène diisocyanate-1,5, le butylène diisocyanate-1,4, 1-isocyanato-3,3,5-triméthyl-5-isocyanatométhylcyclohexane (IPDI isophorone diisocyanate), 1,4 - et/ou 1,3-bis (isocyanatométhyl)cyclohexane (HXDI), 1, 4-cyclohexane diisocyanate, 1-méthyl-2,4 et/ou -2,6-cyclohexane diisocyanate et/ou 4,4 '-, 2.4' - et 2.2'- dicyclohéxylméthane diisocyanate, 2.2' -, 2.4'- et/ou 4.4'- diphénylméthane diisocyanate (MDi), 1, 5-naphthylène diisocyanate (NDI), 2.4 - et/ou 2.6 - toluylène diisocyanate (TDI), 3.3'- diméthyldiphényl diisocyanate, 1,2-diphényléthane diisocyanate et/ou phénylène diisocyanate.

6. Matière thermoplastique selon la revendication 1, **caractérisée en ce que** le polyol est choisi dans le groupe comprenant les monomères ou les polymères triol, les monomères ou les polymères tétrol, les polymères de la famille des Diglycidyl éther de Bisphénol, les polyphénoxy copolymères du bisphénol A et de l'épichlorohydrine, les polyglycérol hyper branchés.

7. Matière thermoplastique selon la revendication 1, **caractérisée en ce que** le thermoplastique polaire est choisi dans le groupe comprenant les polyuréthanes de type polyester, polyéther, polycarbonate, les polyesters tels que le PET, le PBT, le PTT, le PETG, la PCL, le PLA, les copolymères à base de polyester tel que les HYTREL, les polyamides tels que le PA6, le PA 6.6, le PA11 et le PA12, les copolymères à base de polyamide tels que le PEBAX®, les POM homo ou copolymère, les polycarbonates, ainsi que les alliages contenant au moins un desdits polymères thermoplastiques polaires.

8. Utilisation de la matière thermoplastique objet de l'une des revendications 1 à 7 sous la forme de granulés, les granulés étant stockés à l'abri de l'humidité en vue de leur retransformation ultérieure en article moulé.

9. Article moulé obtenu après transformation constitué de la matière thermoplastique objet de l'une des revendications 1 à 7, la post réticulation s'opérant après transformation, au contact de l'humidité.

10. Procédé pour la fabrication de la matière thermoplastique objet de l'une des revendications 1 à 7, selon lequel, à chaud, on injecte ou on extrude ou on compresse un mélange contenant le polymère thermoplastique polaire, le monomère diisocyanate, et le polyol.

11. Procédé selon la revendication 10, **caractérisé en ce que** l'addition du polymère thermoplastique polaire, du monomère diisocyanate, et du polyol est effectuée en un même point ou en des points distincts de l'installation.

12. Procédé pour la fabrication des granulés objet de la revendication 8 selon lequel on extrude, ou injecte ou compresse, à chaud, un mélange contenant le polymère thermoplastique polaire, le monomère diisocyanate, et le polyol, les granulés obtenus étant ensuite refroidis et stockés à l'abri de l'humidité.

13. Procédé pour la fabrication de l'article moulé objet de la revendication 9 selon lequel :
- on extrude, on injecte, on compresse à chaud un mélange contenant le polymère thermoplastique polaire, le monomère diisocyanate, et le polyol,
- on transforme le mélange obtenu à la forme souhaité de l'article,
- on refroidit l'article moulé, la post réticulation étant réalisée ultérieurement au contact de l'humidité.

14. Procédé pour la fabrication de l'article moulé objet de la revendication 9 selon lequel :
- on transforme à chaud les granulés objet de la revendication 8, à la forme souhaité de l'article,
- on refroidit l'article moulé, la post réticulation étant réalisée ultérieurement au contact de l'humidité.

## Claims

1. A thermoplastic material, post-crosslinkable after transformation, obtained by reacting a polar thermoplastic polymer with at least one purified diisocyanate monomer having functionality of 2 or unpurified diisocyanate monomer having functionality comprised between 2 and 3, and representing between 4 and 60% by weight of the polar thermoplastic polymer, in the presence of a polyol having functionality greater than or equal to 3, said polar thermoplastic polymer having substituents that react with isocyanate functions and/or the alcohol functions of the polyol.

2. The thermoplastic material according to claim 1, **characterised in that** the diisocyanate monomer represents between 20 and 60% by weight of the polar thermoplastic polymer.

3. The thermoplastic material according to claim 1, **characterised in that** the diisocyanate monomer has mass less than 1000 g/mol.

4. The thermoplastic material according to claim 1, **characterised in that** the polyol represents between 0.05 and 20% of the mass of the polar thermoplastic.

5. The thermoplastic material according to claim 1, **characterised in that** the diisocyanate monomer is selected from the group comprising tri-, tetra-, penta-, hexa-, hepta and/or octamethylene diisocyanate, 2-methyl-pentamethylene-1,5-diisocyanate, 2-ethylbutylene-1,4-diisocyanate, pentamethylene-1,5-diisocyanate, butylene- 1,4-diisocyanate, 1-isocyanato-3,3,5-trimethyl-5-isocyanatomethylcyclohexane (IPDI isophorone diisocyanate), 1,4-and/or 1,3-bis (isocyanatomethyl)cyclohexane (HXDI), 1,4-cyclohexane diisocyanate, 1-ethyl-2,4- and/or 1-methyl-2,6-cyclohexane diisocyanate and/or 4,4'-, 2,4'- and 2,2'-dicyclohexylmethane diisocyanate, 2,2'-, 2,4'- and/or 4,4'-diphenylmethane diisocyanate (MDI), 1,5-naphthylene diisocyanate (NDI), 2,4- and/or 2,6-tolylene diisocyanate (TDI), 3,3'-dimethyldiphenyl diisocyanate, 1,2-diphenylethane diisocyanate and/or phenylene diisocyanate.

6. The thermoplastic material according to claim 1, **characterised in that** the polyol is selected from the group comprising triol monomers or polymers, tetrol monomers or polymers, polymers from the family of bisphenol diglycidyl ethers, polyphenoxy copolymers of bisphenol A and epichlorohydrin, hyper-branched polyglycerols.

7. The thermoplastic material according to claim 1, **characterised in that** the polar thermoplastic is selected from the group comprising polyester, polyether, polycarbonate type polyurethanes, polyesters such as PET, PBT, PTT, PETG, PCL, PLA, polyester-based copolymers such as HYTREL, polyamides such as PA6, PA 6.6, PA11 and PA 12, polyamide-based copolymers such as PEBAX®, POM homo- or copolymers, polycarbonates, and blends containing at least one of said polar thermoplastic polymers.

8. A use of the thermoplastic material that is the object of one of claims 1 to 7 in granule form, the granules being stored in a dry place with a view to subsequently being retransformed into a moulded article.

9. A moulded article obtained after transformation constituted of the thermoplastic material that is the object of one of claims 1 to 7, the post-crosslinking being performed after transformation, when wetted.

10. A process for manufacturing the thermoplastic material that is the object of one of claims 1 to 7, according to which, when hot, a mixture containing the polar thermoplastic polymer, the diisocyanate monomer, and the polyol is injected or extruded or compressed.

11. The process according to claim 10, **characterised in that** the polar thermoplastic polymer, the diisocyanate monomer, and the polyol are added at the same point or at different points'of the facility.

12. A process for manufacturing the granules that are the object of claim 8 wherein, when hot, a mixture containing the polar thermoplastic polymer, the diisocyanate monomer, and the polyol is extruded, injected or compressed, the granules obtained being then cooled and stored in a dry place.

13. A process for manufacturing the moulded article that is the object of claim 9 wherein:
- when hot, a mixture containing the polar thermoplastic polymer, the diisocyanate monomer, and the polyol is extruded, injected or compressed,
- the mixture obtained is transformed into the desired form of the article,
- the moulded article is cooled, the post-crosslinking being performed subsequently when wetted.

14. A process for manufacturing the moulded article that is the object of claim 9 wherein:
- when hot the granules that are the object of claim 8 are transformed into the desired form of the article,
- the moulded article is cooled, the post-crosslinking being performed subsequently when wetted.

## Patentansprüche

1. Thermoplastisches Material, das nach der Umwandlung nachvernetzbar ist und durch eine Reaktion im Beisein eines Polyols mit einer Funktionalität höher als oder gleich 3 zwischen einem polaren thermoplastischen Polymer und mindestens einem Diisocyanatmonomer erhalten wird, das gereinigt eine Funktionalität gleich 2 und nicht gereinigt eine Funktionalität zwischen 2 und 3 hat und zwischen 4 und 60 Gew.-% des polaren thermoplastischen Polymers ausmacht, wobei das polare thermoplastische Polymer gegenüber Isocyanatfunktionen und/oder Alkoholfunktionen des Polyols reaktive Gruppen aufweist.

2. Thermoplastisches Material nach Anspruch 1, **dadurch gekennzeichnet, dass** das Diisocyanatmonomer zwischen 20 und 60 Gew.-% des polaren thermoplastischen Polymers ausmacht.

3. Thermoplast nach Anspruch 1, **dadurch gekennzeichnet, dass** das Diisocyanatmonomer eine Masse von weniger als 1000 g/mol besitzt.

4. Thermoplastisches Material nach Anspruch 1, **dadurch gekennzeichnet, dass** das Polyol zwischen 0,05 und 20 % der Masse des polaren Thermoplasts ausmacht.

5. Thermoplastisches Material nach Anspruch 1, **dadurch gekennzeichnet, dass** das Diisocyanatmonomer aus der Gruppe ausgewählt ist, die Tri-, Tetra-, Penta-, Hexa-, Hepta- und/oder Octamethylendiisocyanat, 2-Methyl-Pentamethylen-1,5-Diisocyanat, 2-Ethylbutylen-1,4-Diisocyanat, Pentamethylen-1,5-Diisocyanat, Butylen-1,4-Diisocyanat, 1-Isocyano-3,3,5-Trimethyl-5-Isocyanatomethylcyclohexan (IPDE Isophorondiisocyanat), 1,4-und /oder 1,3-bis(Isocyanatomethyl)cyclohexan (HXDI), 1,4-Cyclohexandiisocyanat, 1-Methyl-2,4- und/oder -2,6-Cyclohexandiisocyanat und/oder 4,4'-, 2,4'- und 2,2'-Diocyclohexylmethandiisocyanat, 2,2'-, 2,4'-und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyldiphenyldiisocyanat, 1,2-Diphenylethandiisocyanat und/oder Phenylendiisocyanat umfasst.

6. Thermoplastisches Material nach Anspruch 1, **dadurch gekennzeichnet, dass** das Polyol aus der Gruppe ausgewählt ist, die Triolmonomere oder -polymere, Tetrolmonomere oder -polymere, Polymere aus der Reihe der Bisphenoldiglycidether, Polyphenoxycopolymere von Bisphenol A und Epichlorhydrin, hyperverzweigte Polyglycerole umfasst.

7. Thermoplastisches Material nach Anspruch 1, **dadurch gekennzeichnet, dass** der polare Thermoplast aus der Gruppe ausgewählt ist, die Polyurethane des Typs Polyester, Polyether, Polycarbonat, Polyester wie etwa PET, PBT, PTT, PETG, PCL, PLA, Copolymere auf Basis von Polyester wie etwa HYTREL, Polyamide wie etwa PA6, PA6.6, PA11 und PA12, Copolymere auf Basis von Polyamid wie etwa PEBAX®, POM-Homo- und Copolymer, Polycarbonate sowie Gemische umfasst, die mindestens eines dieser polaren thermoplastischen Polymere enthalten.

8. Verwendung des thermoplastischen Materials nach einem der Ansprüche 1 bis 7 in Form von Granulat, wobei das Granulat im Hinblick auf seine spätere erneute Umwandlung in einen geformten Gegenstand vor Feuchtigkeit geschützt gelagert wird.

9. Geformter Gegenstand, der nach einer Umwandlung erhalten wird und aus einem thermoplastischen Material nach einem der Ansprüche 1 bis 7 besteht, wobei die Nachvernetzung nach der Umwandlung in Kontakt mit Feuchtigkeit stattfindet.

10. Verfahren zur Herstellung des thermoplastischen Materials nach einem der Ansprüche 1 bis 7, gemäß dem ein Gemisch warm spritzgegossen oder extrudiert oder gepresst wird, das das polare thermoplastische Polymer, das Diisocyanatmonomer und das Polyol enthält.

11. Verfahren nach Anspruch 10, **dadurch gekennzeichnet, dass** die Zugabe des polaren thermoplastischen Polymers, des Diisocyanatmonomers und des Polyols an ein und demselben Punkt oder an unterschiedlichen Punkten der Anlage erfolgt.

12. Verfahren zur Herstellung des Granulats nach Anspruch 8, gemäß dem ein
Gemisch warm extrudiert, spritzgegossen oder gepresst wird, das das polare thermoplastische Polymer, das Diisocyanatmonomer und das Polyol enthält, wobei das gewonnene Granulat anschließend abgekühlt und vor Feuchtigkeit geschützt gelagert wird.

13. Verfahren zur Herstellung des geformten Gegenstands nach Anspruch 9, gemäß dem:
- ein Gemisch, das das polare thermoplastische Polymer, das Diisocyanatmonomer und das Polyol enthält, warm extrudiert, spritzgegossen oder gepresst wird,
- das erhaltene Gemisch zur gewünschten Form des Gegenstands umgeformt wird,
- der geformte Gegenstand abgekühlt wird, wobei die Nachvernetzung später in Kontakt mit Feuchtigkeit stattfindet.

14. Verfahren zur Herstellung des geformten Gegenstands nach Anspruch 9, gemäß dem:
- das Granulat nach Anspruch 8 warm zur gewünschten Form des Gegenstands umgeformt wird,
- der geformte Gegenstand abgekühlt wird, wobei die Nachvernetzung später in Kontakt mit Feuchtigkeit stattfindet.
